# FASCICULE DE BREVET EUROPEEN

(11) **EP 1 282 532 B1**
(45) Date de publication et mention de la délivrance du brevet: **27.07.2005**
(21) Numéro de dépôt: 01919565.0
(22) Date de dépôt: 26.03.2001
(51) Int. Cl.: B60H 1/00, B60H 1/32, F25B 29/00

(54) **DISPOSITIF DE REGULATION THERMIQUE PERFECTIONNE A POMPE A CHALEUR POUR VEHICULE AUTOMOBILE**
FAHRZEUG- TEMPERATURREGULIERUNGSSYSTEM MIT WÄRMEPUMPE
IMPROVED TEMPERATURE CONTROL DEVICE WITH HEAT PUMP FOR MOTOR VEHICLE

(30) Priorité: 15.05.2000 FR 0006116
(43) Date de publication de la demande: 12.02.2003
(73) Titulaire: Peugeot Citroen Automobiles SA, 92200 Neuilly sur Seine (FR)
(72) Inventeur: AMARAL, Manuel, F-94400 Vitry Sur Seine (FR)
(74) Mandataire: de la Bigne, Guillaume Michel Marie
(86) Numéro de dépôt international: PCT/FR2001/000910
(87) Numéro de publication internationale: WO 2001/087653

(56) Documents cités:
- FR-A- 2 697 210
- US-A- 2 893 218
- US-A- 5 265 437

## Description

La présente invention concerne un dispositif de régulation thermique perfectionné à pompe à chaleur pour véhicule automobile.

Elle s'applique en particulier à la climatisation d'un habitacle du véhicule automobile et/ou à la régulation thermique d'un organe de ce véhicule.

On connaît déjà dans l'état de la technique, notamment d'après FR-2 697 210, un dispositif de régulation thermique pour véhicule automobile, du type comprenant :
- une pompe à chaleur comportant un circuit principal de fluide frigorigène à compression prélevant des calories d'une source froide pour les transférer vers une source chaude,
- la source froide comportant un premier échangeur thermique fluide frigorigène/liquide caloporteur couplant thermiquement le circuit principal de fluide frigorigène à un premier circuit secondaire de liquide caloporteur pouvant être raccordé sélectivement à au moins deux échangeurs thermiques,
- la source chaude comportant un second échangeur thermique fluide frigorigène/liquide caloporteur couplant thermiquement le circuit principal de fluide frigorigène à un second circuit secondaire de liquide caloporteur pouvant être raccordé sélectivement à au moins deux échangeurs thermiques.

Le circuit à compression comprend habituellement un évaporateur, en échange thermique avec la source froide, et un condenseur, en échange thermique avec la source chaude, ces éléments étant raccordés entre eux par un compresseur et un détendeur. Le fluide frigorigène se vaporise dans l'évaporateur en enlevant de la chaleur à la source froide. Le compresseur aspire le fluide frigorigène vaporisé et le refoule dans le condenseur refroidi (par échange thermique avec la source chaude) dans lequel il se condense. Le détendeur laisse passer le fluide frigorigène liquide vers l'évaporateur en abaissant sa pression.

Une pompe à chaleur peut être utilisée soit pour chauffer un espace ou un organe soit pour refroidir cet espace ou cet organe.

Dans FR-2 697 210, les circuits secondaires peuvent être raccordés sélectivement, par l'intermédiaire de vannes appropriées, à un échangeur thermique extérieur, placé dans le compartiment moteur du véhicule, et à un échangeur thermique intérieur, placé dans l'habitacle du véhicule. En agissant sur les vannes, on peut utiliser la pompe à chaleur soit pour réfrigérer l'habitacle d'un véhicule (dans ce premier cas, la source chaude est l'échangeur thermique extérieur et la source froide est l'échangeur thermique intérieur), soit pour réchauffer l'habitacle (dans ce second cas, la source chaude est l'échangeur thermique intérieur et la source froide est l'échangeur thermique extérieur).

On notera dans ce dernier cas que les performances de la pompe à chaleur sont limitées par la température de l'air extérieur. En effet, en saison froide, la température de l'air n'est pas suffisante pour obtenir un rendement satisfaisant de la pompe à chaleur, lorsque celle-ci est utilisée à des fins de chauffage de l'habitacle. Par ailleurs, le givrage de la source froide en saison froide peut nuire aux performances de fonctionnement de la pompe à chaleur.

Par ailleurs, la réversibilité des échangeurs extérieur et intérieur (utilisés chacun soit comme source chaude soit comme source froide) conduit essentiellement aux deux inconvénients suivants :
1) la performance de chaque échangeur est limitée du fait qu'elle ne peut pas être optimisée pour un fonctionnement spécifique de l'échangeur en source chaude ou bien en source froide ;
2) l'hygrométrie de l'air environnant l'échangeur thermique intérieur est difficile à contrôler.

Le second inconvénient se révèle tout particulièrement lors de la climatisation de l'habitacle du véhicule en mi-saison. Dans ce cas, l'échangeur thermique intérieur est susceptible de connaître de fréquentes alternances de ses modes de fonctionnement de réfrigération et de chauffage de l'habitacle. Ainsi, en mode réfrigération, l'échangeur thermique intérieur se charge d'eau. Lorsque ce dernier passe en mode chauffage, l'eau accumulée en mode réfrigération est évacuée dans l'habitacle par évaporation. FR-2 697 210 propose de pallier cet inconvénient au moyen d'un échangeur thermique auxiliaire agencé au voisinage de l'échangeur thermique intérieur. Toutefois, cet échangeur auxiliaire n'est pas fonctionnel dans certains cas notamment pour des températures de mi-saison voisines de 15°C.

L'invention a pour but d'optimiser les performances d'un dispositif de régulation thermique à pompe à chaleur notamment lorsqu'il est utilisé pour réchauffer ou réfrigérer l'habitacle d'un véhicule automobile ou encore lorsqu'il est utilisé pour réguler thermiquement un organe de ce véhicule.

A cet effet, l'invention a pour objet un dispositif de régulation thermique pour véhicule automobile, du type précité, caractérisé en ce que le premier circuit secondaire peut être raccordé sélectivement à un échangeur thermique dit extérieur et un échangeur thermique dit froid, et en ce que le second circuit secondaire peut être raccordé sélectivement à l'échangeur extérieur et un échangeur thermique dit chaud.

Suivant d'autres caractéristiques de différents modes de réalisation de ce dispositif :
- les échangeurs froid et chaud sont agencés dans un habitacle du véhicule ;
- l'échangeur extérieur est un échangeur liquide caloporteur/air ;
- l'échangeur froid est un échangeur liquide caloporteur/air ;
- l'échangeur chaud est un échangeur liquide caloporteur/air ;
- le premier circuit secondaire de liquide caloporteur comprend une vanne trois voies raccordée à la sortie du premier échangeur thermique fluide frigorigène/liquide caloporteur de la source froide, à l'entrée de l'échangeur extérieur et à l'entrée de l'échangeur froid ;
- le second circuit secondaire de liquide caloporteur comprend une vanne trois voies raccordée à la sortie du second échangeur de fluide frigorigène/liquide caloporteur de la source chaude, à l'entrée de l'échangeur extérieur et à l'entrée de l'échangeur chaud ;
- les premier et second circuits secondaires de liquide caloporteur comprennent une vanne trois voies commune raccordée à l'entrée du premier échangeur thermique fluide frigorigène/liquide caloporteur de la source froide, à l'entrée du second échangeur thermique fluide frigorigène/liquide caloporteur de la source chaude et à la sortie de l'échangeur extérieur ;
- le premier circuit secondaire peut être raccordé sélectivement à un échangeur thermique extérieur supplémentaire ;
- l'échangeur extérieur supplémentaire est un échangeur liquide caloporteur/vecteur de calories provenant directement ou indirectement d'un gaz, notamment un gaz d'échappement d'un moteur du véhicule, d'un liquide, notamment un liquide de refroidissement du moteur du véhicule, ou d'un solide, notamment au moins un composant électrique ou électronique du véhicule, ce vecteur de calories est choisi de façon que l'échangeur extérieur supplémentaire forme, vis-à-vis du liquide caloporteur circulant dans le premier circuit secondaire, une source froide plus chaude que l'échangeur extérieur ;
- le premier circuit secondaire de liquide caloporteur comprend une vanne trois voies supplémentaire raccordée à la sortie du premier échangeur thermique fluide frigorigène/liquide caloporteur de la source froide, à l'entrée de l'échangeur extérieur et à l'entrée de l'échangeur extérieur supplémentaire ;
- l'échangeur chaud est raccordé à une branche d'un circuit de liquide de refroidissement d'un moteur thermique du véhicule, l'extrémité aval de la branche étant raccordée à une entrée de liquide caloporteur de l'échangeur chaud et l'extrémité amont de la branche étant raccordée à une sortie de liquide caloporteur de l'échangeur chaud ;
- le dispositif de régulation thermique comprend un échangeur thermique subsidiaire en échange thermique avec un organe du véhicule à réguler thermiquement, raccordé en parallèle aux échangeurs froid et chaud ;
- le premier circuit secondaire de liquide caloporteur comprend une vanne trois voies subsidiaire raccordée à la sortie du premier échangeur thermique fluide frigorigène/liquide caloporteur de la source froide, à l'entrée de l'échangeur subsidiaire et à l'entrée de l'échangeur froid ;
- le second circuit secondaire de liquide caloporteur comprend une vanne trois voies subsidiaire raccordée à la sortie du second échangeur de fluide frigorigène/liquide caloporteur de la source chaude, à l'entrée de l'échangeur subsidiaire et à l'entrée de l'échangeur chaud ;
- les premier et second circuits secondaires de liquide caloporteur comprennent une vanne trois voies subsidiaire commune raccordée à l'entrée du premier échangeur thermique fluide frigorigène/liquide caloporteur de la source froide, à l'entrée du second échangeur thermique fluide frigorigène/liquide caloporteur de la source chaude et à la sortie de l'échangeur subsidiaire ;
- le circuit principal de fluide frigorigène comportant les deux échangeurs thermiques dans lesquels circule le fluide frigorigène est constitué de plusieurs tronçons regroupés en un seul module, dans lequel circule le fluide frigorigène, destiné à être relié aux circuits secondaires de liquide caloporteur par l'intermédiaire des échangeurs thermiques fluide frigorigène/liquide caloporteur, les tronçons étant raccordés entre eux de préférence par soudage ;
- le liquide caloporteur d'au moins un des premier et second circuits secondaires est un mélange d'eau et d'antigel.

L'invention sera mieux comprise à la lecture de la description qui va suivre, donnée uniquement à titre d'exemple et faite en se référant aux dessins dans lesquels :
- les figures 1 à 3 sont des vues schématiques, dans trois configurations d'utilisation différentes respectivement, d'un dispositif de régulation thermique pour véhicule automobile, selon un premier mode de réalisation de l'invention;
- les figures 4 à 6 sont des vues similaires aux figures précédentes d'un dispositif de régulation thermique pour véhicule automobile, selon des deuxième, troisième et quatrième modes de réalisation de l'invention respectivement ;
- la figure 7 est une vue schématique d'une pompe à chaleur utilisant du dioxyde de carbone comme liquide frigorigène susceptible d'équiper un dispositif de régulation thermique selon l'un quelconque des modes de réalisation.

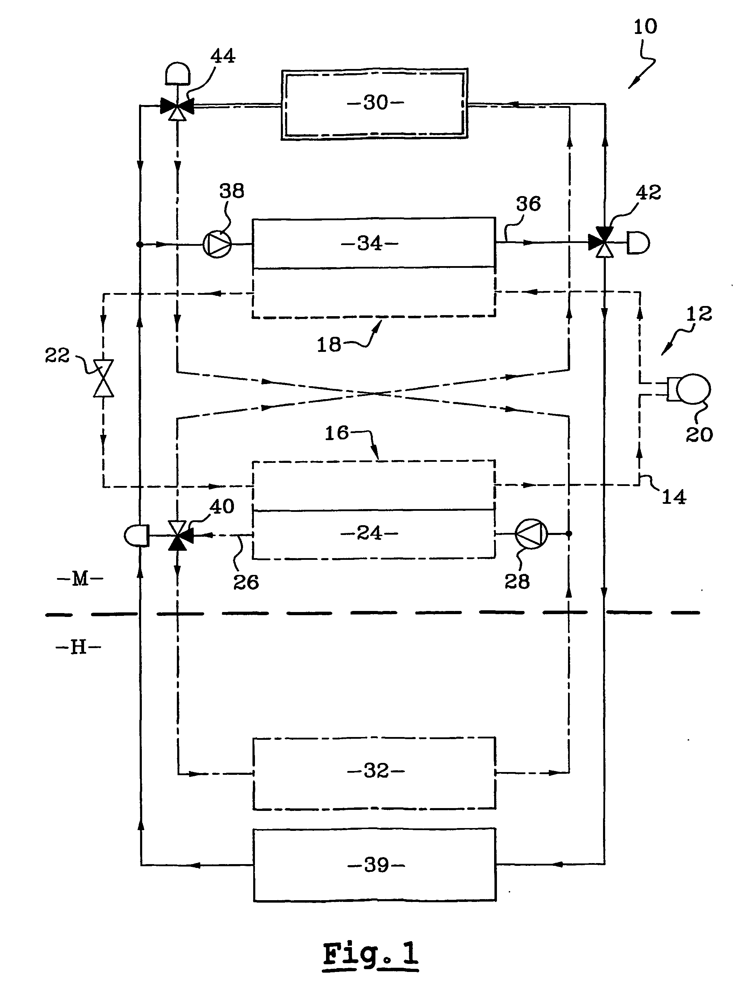

On a représenté sur les figures 1 à 3, un dispositif de régulation thermique pour véhicule automobile selon un premier mode de réalisation de l'invention, désigné par la référence générale 10.

Dans ce qui suit, deux organes sont dits couplés thermiquement entre eux lorsqu'ils échangent de la chaleur entre eux au moyen d'un échangeur thermique approprié.

Le dispositif de régulation thermique 10 comprend une pompe à chaleur 12 comportant un circuit principal 14 de fluide frigorigène, de type à compression, prélevant des calories d'une source froide 16 pour les transférer au moins partiellement vers une source chaude 18.

Les sources froide 16 et chaude 18 sont raccordées entre elles par un compresseur 20 (électrique ou mécanique) et une vanne de détente 22. Le fluide frigorigène se vaporise en enlevant de la chaleur à la source froide 16. Le compresseur 20 aspire le fluide vaporisé et le refoule vers la source chaude où il se condense en refroidissant. La vanne de détente 22 laisse passer le fluide frigorigène liquide vers la source froide 16 en abaissant sa pression. Le sens de circulation du fluide frigorigène dans le circuit 14 est indiqué par des flèches sur la figure 1.

La source froide 16 comporte un premier échangeur thermique 24 fluide frigorigène/liquide caloporteur couplant thermiquement le circuit principal 14 de fluide frigorigène à un premier circuit secondaire 26 de liquide caloporteur. Ce dernier comporte une pompe 28 de mise en circulation du liquide caloporteur, raccordée à l'entrée du premier échangeur thermique 24.

Le premier circuit secondaire 26 peut être raccordé sélectivement à un échangeur thermique dit extérieur 30 et à un échangeur thermique dit froid 32.

Dans l'exemple illustré sur les figures 1 à 3, l'échangeur extérieur 30 est un échangeur liquide caloporteur/air, placé dans le compartiment moteur M du véhicule, et l'échangeur froid 32 est un échangeur liquide caloporteur/air, placé dans l'habitacle H du véhicule.

La source chaude 18 comporte un second échangeur thermique 34, fluide frigorigène/liquide caloporteur couplant thermiquement le circuit principal 14 de fluide frigorigène à un second circuit secondaire 36 de liquide caloporteur. Ce dernier comporte une pompe 38 de mise en circulation du liquide caloporteur, raccordée à l'entrée du second échangeur thermique 34.

Le second circuit secondaire 36 peut être raccordé sélectivement à l'échangeur extérieur 30 et à un échangeur thermique dit chaud 39.

Dans l'exemple illustré sur les figures 1 à 3, l'échangeur chaud 39 est un échangeur liquide caloporteur/air placé dans l'habitacle H du véhicule.

Un ventilateur classique, non représenté sur les figures, permet de faire circuler un flux d'air à travers les échangeurs froid 32 et chaud 39.

La pompe à chaleur 12, raccordée aux premier et second échangeurs thermiques 24 , 34 est agencée par exemple dans le compartiment moteur du véhicule.

Le fluide frigorigène circulant dans le circuit principal est d'un type classique. Ce fluide frigorigène est choisi par exemple parmi un dérivé chloré et fluoré du méthane ou de l'éthane (Fréon), un hydrocarbure, l'ammoniac ou le dioxyde de carbone.

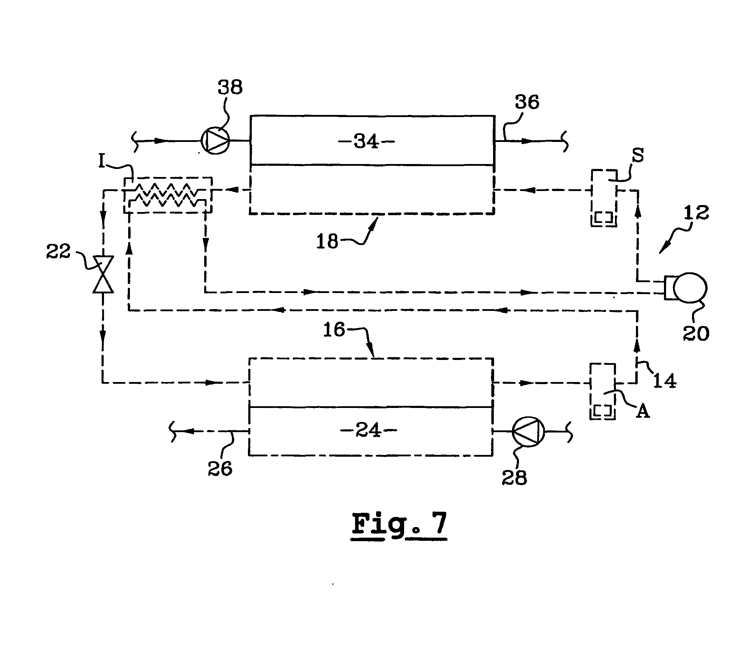

Dans le cas d'utilisation de dioxyde de carbone, on adaptera la pompe à chaleur 12 avec les organes classiques spécifiques à cette utilisation. Sur la figure 7 on a représenté la pompe à chaleur 12 adaptée pour l'utilisation de dioxyde de carbone. Dans ce cas, le circuit 14 comporte un accumulateur A raccordé à la sortie du premier échangeur thermique 24 (encore appelé évaporateur) et un séparateur d'huile S (provenant du compresseur 20) raccordé entre le compresseur 20 et le second échangeur thermique 34 (encore appelé refroidisseur de gaz). Le circuit 14 de dioxyde de carbone comporte également un échangeur interne I couplant thermiquement une branche du circuit 14 reliant le second échangeur thermique 34 à la vanne de détente 22 et une branche du circuit 14 reliant l'accumulateur A au compresseur 20. L'accumulateur A, le séparateur S et l'échangeur interne I sont des organes classiques habituellement prévus dans les pompes à chaleur utilisant le dioxyde de carbone comme fluide frigorigène.

Le liquide caloporteur circulant dans le premier 26 ou second 36 circuit secondaire est de préférence un mélange d'eau et d'antigel (glycol).

Le raccordement des deux circuits secondaires 26, 36 de liquide caloporteur, respectivement aux échangeurs extérieur 30, froid 32, et chaud 39, est réalisé au moyen d'une vanne trois voies 40 du premier circuit secondaire, d'une vanne trois voies 42 du second circuit secondaire et d'une vanne trois voies 44 commune aux deux circuits secondaires.

La vanne trois voies 40 du premier circuit secondaire 26 est raccordée à la sortie du premier échangeur thermique 24 fluide frigorigène/liquide caloporteur de la source froide, à l'entrée de l'échangeur extérieur 30 et à l'entrée de l'échangeur froid 32.

La vanne 42 du second circuit secondaire 36 est raccordée à la sortie du second échangeur thermique 34 fluide frigorigène/liquide caloporteur de la source chaude, à l'entrée de l'échangeur extérieur 30 et à l'entrée de l'échangeur chaud 39.

La vanne 44, commune aux premier 26 et second 36 circuits secondaires de liquide caloporteur est raccordée à l'entrée du premier échangeur thermique 24 fluide frigorigène/liquide caloporteur de la source froide, à l'entrée du second échangeur thermique 34 fluide frigorigène/liquide caloporteur de la source chaude et à la sortie de l'échangeur extérieur 30.

Les vannes 40 à 44 sont commandées par des moyens électriques classiques.

La figure 1 illustre la configuration du dispositif de régulation thermique 10 en mode de réfrigération de l'habitacle du véhicule. Dans ce cas, les vannes 40 à 44 sont réglées de manière à raccorder le premier circuit secondaire 26 de liquide caloporteur à l'échangeur froid et le second circuit secondaire 36 de liquide caloporteur à l'échangeur extérieur 30.

Le liquide caloporteur du premier circuit secondaire 26 prélève des calories dans l'habitacle, par l'intermédiaire de l'échangeur froid 32, et les restitue au fluide frigorigène vaporisé, par l'intermédiaire du premier échangeur thermique 24 fluide frigorigène/liquide caloporteur.

Le liquide caloporteur du second circuit secondaire 36 prélève des calories au fluide frigorigène condensé, par l'intermédiaire du second échangeur thermique 34 fluide frigorigène/liquide caloporteur, et les évacue à l'extérieur du véhicule, par l'intermédiaire de l'échangeur extérieur 30.

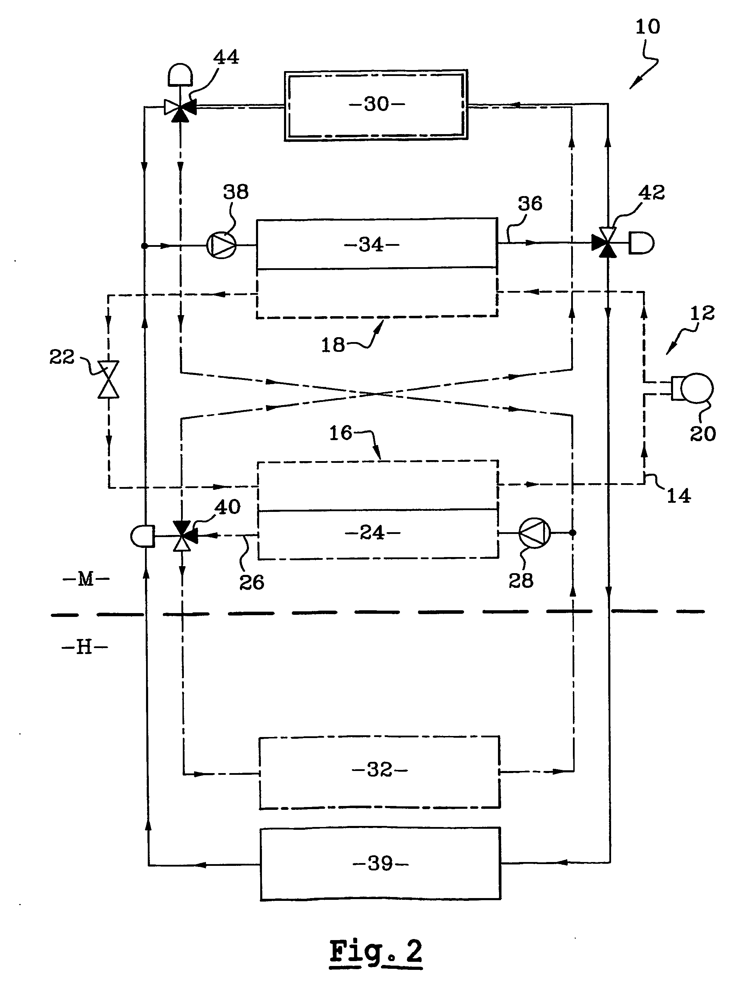

La figure 2 illustre le dispositif 10 dans une configuration de chauffage de l'habitacle. Dans ce cas, les vannes 40 à 44 sont réglées de manière à raccorder le premier circuit secondaire 26 de liquide caloporteur à l'échangeur extérieur 30 et le second circuit secondaire 36 de liquide caloporteur à l'échangeur chaud 39.

Le liquide caloporteur du premier circuit secondaire 26 prélève des calories à l'extérieur du véhicule, par l'intermédiaire de l'échangeur extérieur 30, et les restitue au fluide frigorigène vaporisé, par l'intermédiaire du premier échangeur thermique 24 fluide frigorigène/liquide caloporteur.

Le liquide caloporteur du second circuit secondaire 36 prélève des calories dans le fluide frigorigène condensé, par l'intermédiaire du second échangeur thermique 34 fluide frigorigène/liquide caloporteur, et les restitue dans l'habitacle, par l'intermédiaire de l'échangeur chaud 39.

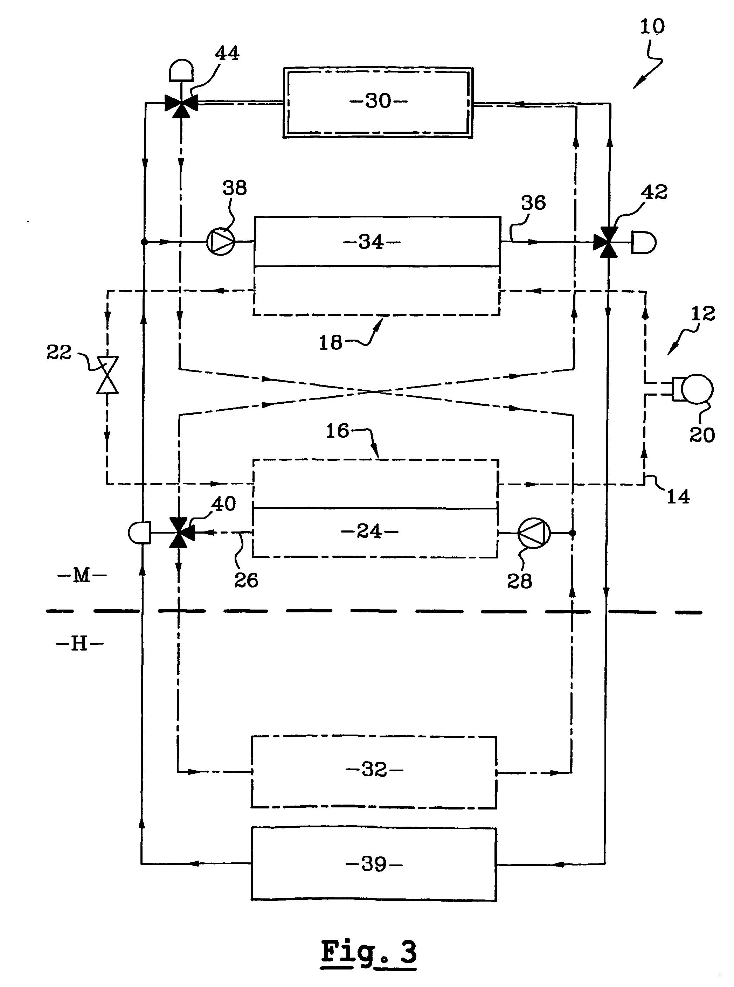

La figure 3 illustre le dispositif 10 dans une configuration dans laquelle les deux circuits secondaires 26, 36 sont raccordés à la fois aux échangeurs froid 32 et chaud 39 par un réglage approprié des vannes 40 à 44. Cette configuration permet, par exemple, d'accélérer le chauffage de l'habitacle tout en contrôlant le taux d'humidité relative dans celui-ci.

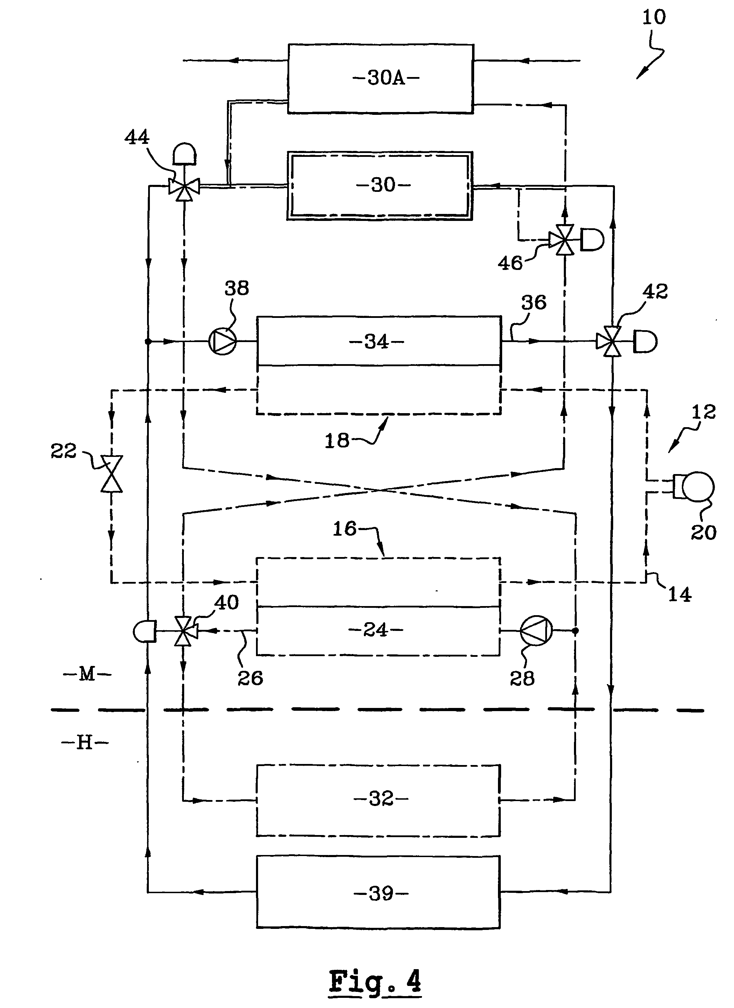

Sur les figures 4 à 6, on a représenté le dispositif de régulation thermique 10 selon des deuxième, troisième et quatrièmes modes de réalisation de l'invention. Sur ces figures 4 à 6, les éléments analogues à ceux des figures précédentes sont désignés par des références identiques.

Dans le deuxième mode de réalisation de l'invention illustré sur la figure 4, le premier circuit secondaire 26 peut être raccordé sélectivement à l'échangeur thermique froid 32, l'échangeur thermique extérieur 30 et un échangeur thermique extérieur supplémentaire 30A. Ce dernier est un échangeur liquide caloporteur/vecteur de calories provenant directement ou indirectement d'un gaz, notamment le gaz d'échappement du moteur du véhicule, d'un liquide, notamment le liquide de refroidissement du moteur du véhicule, ou d'un solide, notamment au moins un composant électrique ou électronique du véhicule. Ce vecteur de calories est choisi de façon que l'échangeur extérieur supplémentaire 30A forme, vis-à-vis du liquide caloporteur circulant dans le premier circuit secondaire 26, une source froide plus chaude que l'échangeur extérieur 30.

Le premier circuit secondaire 26 de liquide caloporteur comprend une vanne trois voies supplémentaire 46 raccordée à la sortie du premier échangeur thermique 24 fluide frigorigène/liquide caloporteur de la source froide 16, à l'entrée de l'échangeur extérieur 30 et à l'entrée de l'échangeur extérieur supplémentaire 30A.

Cette vanne supplémentaire 46 permet de raccorder le premier circuit secondaire 26 sélectivement aux échangeurs thermiques extérieur 30 et extérieur supplémentaire 30A. Ainsi, en saison froide, lorsque le dispositif 10 est en configuration de chauffage, on préférera raccorder le premier circuit secondaire 26 à l'échangeur extérieur supplémentaire 30A plutôt qu'à l'échangeur extérieur 30 afin d'éviter le givrage de ce dernier. En effet, l'échangeur extérieur supplémentaire 30A forme, vis-à-vis du liquide caloporteur circulant dans le premier circuit secondaire 26, une source froide plus chaude que l'échangeur extérieur 30.

On notera que l'échangeur extérieur supplémentaire 30A permet de récupérer avantageusement les calories dissipées par des organes divers du véhicule et généralement perdues.

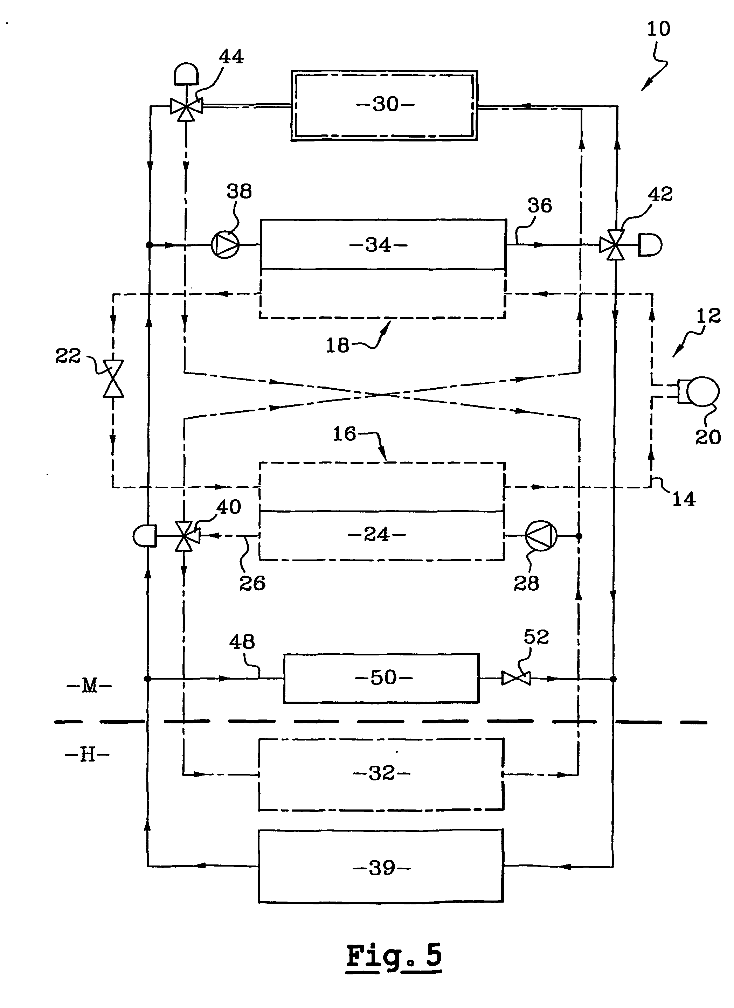

Dans le troisième mode de réalisation de l'invention illustré sur la figure 5, l'échangeur chaud 39 est susceptible de restituer à l'habitacle des calories provenant du liquide de refroidissement du moteur du véhicule.

A cet effet, l'échangeur chaud 39 est raccordé à une branche 48 d'un circuit de liquide de refroidissement du moteur thermique 50 du véhicule. Ce dernier est bien entendu agencé dans le compartiment M. L'extrémité aval de la branche 48 est raccordée à une entrée de liquide caloporteur de l'échangeur chaud 39. L'extrémité amont de la branche 48 est raccordée à une sortie de liquide caloporteur de l'échangeur chaud 39. Le cas échéant, une vanne 52 permet de régler le débit de liquide de refroidissement circulant dans l'échangeur chaud 39, en provenance de l'extrémité amont de la branche 48.

Le troisième mode de réalisation de l'invention permet de réchauffer l'habitacle au moyen de calories provenant du circuit de refroidissement du moteur en utilisant l'échangeur chaud 39, sans recourir à un échangeur additionnel spécifique au circuit de refroidissement.

Le dispositif de régulation thermique selon l'invention peut être utilisé pour réguler la température d'un espace du véhicule autre que l'habitacle ou d'un organe quelconque du véhicule.

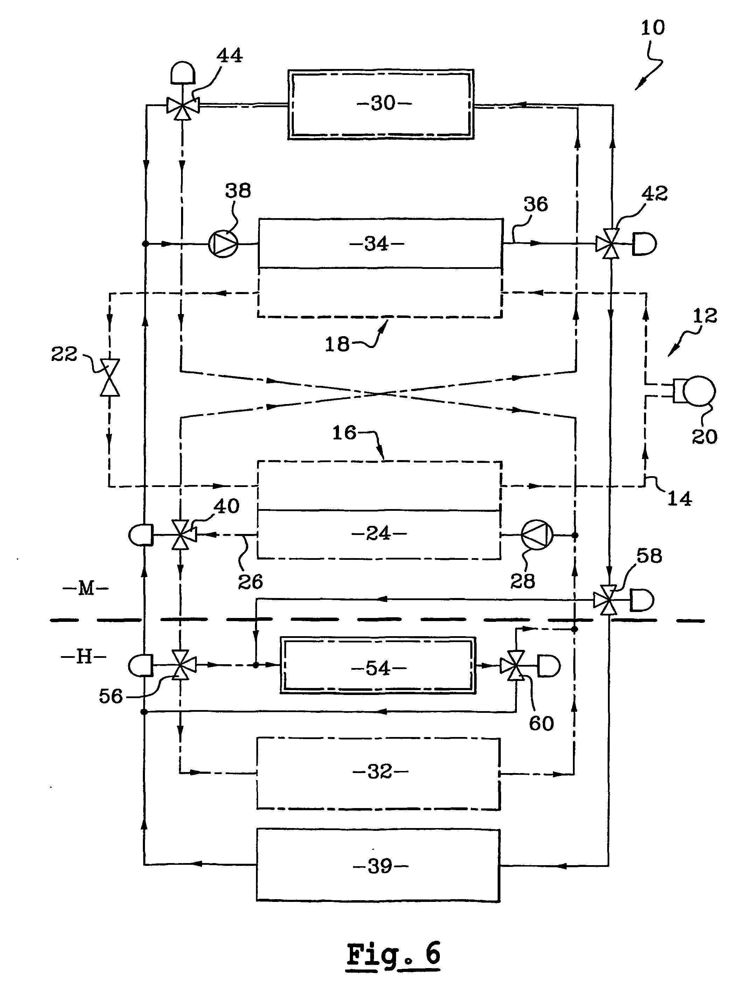

Cette dernière possibilité fait l'objet du quatrième mode de réalisation de l'invention illustré sur la figure 6.

Dans ce cas, le dispositif de régulation thermique 10 comprend un échangeur thermique subsidiaire 54 en échange thermique avec un organe du véhicule à réguler thermiquement, par exemple un organe agencé dans l'habitacle tel qu'un boîtier électronique. Cet échangeur subsidiaire 54 est raccordé en parallèle aux échangeurs froid 32 et chaud 39 à l'aide des moyens décrits ci-dessous.

Le premier circuit secondaire 26 de liquide caloporteur comprend une vanne trois voies subsidiaire 56 raccordée à la sortie du premier échangeur thermique 24 fluide frigorigène/liquide caloporteur de la source froide, à l'entrée de l'échangeur subsidiaire 54 et à l'entrée de l'échangeur froid 32.

Le second circuit secondaire 36 de liquide caloporteur comprend une vanne trois voies subsidiaire 58 raccordée à la sortie du second échangeur 34 de fluide frigorigène/liquide caloporteur de la source chaude, à l'entrée de l'échangeur subsidiaire 54 et à l'entrée de l'échangeur chaud 39.

Les premier 26 et second 36 circuits secondaires de liquide caloporteur comprennent une vanne trois voies subsidiaire 60 commune raccordée à l'entrée du premier échangeur thermique 24 fluide frigorigène/liquide caloporteur de la source froide, à l'entrée du second échangeur thermique 34 fluide frigorigène/liquide caloporteur de la source chaude et à la sortie de l'échangeur subsidiaire 54.

Le réglage des vannes trois voies 56 à 60 permet de contrôler la température de l'organe à réguler thermiquement en contrôlant les débits des liquides caloporteurs provenant des circuits secondaires 26 et 36 et traversant l'échangeur subsidiaire 54.

Parmi les avantages de l'invention, on notera que les échangeurs thermiques froid 32 et chaud 39 ont des fonctions spécifiques, l'un étant destiné à refroidir et l'autre à chauffer. De ce fait, leur fonctionnement peut être optimisé.

Par ailleurs, le circuit principal 14 de fluide frigorigène, comportant notamment les deux échangeurs thermiques 24, 34 dans lesquels circule le fluide frigorigène, le compresseur 20 et la vanne de détente 22, est constitué de plusieurs tronçons qui sont avantageusement regroupés en un seul module dans lequel circule le fluide frigorigène. Les tronçons sont reliés entre eux de préférence par soudage de façon à former des raccords solides et étanches susceptibles de résister à des pressions élevées, pouvant dépasser par exemple 100 bars (10⁷ Pa), notamment lorsque le fluide frigorigène est constitué par du dioxyde de carbone.

Le module constitué par le circuit de fluide frigorigène peut être assemblé et chargé de fluide frigorigène préalablement à son montage dans le véhicule. Lors du montage dans le véhicule, le module est relié aux circuits secondaires 26, 36 de liquide caloporteur par l'intermédiaire des échangeurs thermiques 24, 34 fluide frigorigène/liquide caloporteur.

Le module, avantageusement monté dans le compartiment moteur du véhicule, est isolé de l'habitacle ce qui évite les risques de fuite de fluide frigorigène dans cet habitacle et préserve ce dernier de nuisances sonores.

## Revendications

1. Dispositif de régulation thermique pour véhicule automobile, du type comprenant :
- une pompe à chaleur (12) comportant un circuit principal (14) de fluide frigorigène à compression prélevant des calories d'une source froide (16) pour les transférer vers une source chaude (18),
- la source froide (16) comportant un premier échangeur thermique (24) fluide frigorigène/liquide caloporteur couplant thermiquement le circuit principal (14) de fluide frigorigène à un premier circuit secondaire (26) de liquide caloporteur pouvant être raccordé sélectivement à au moins deux échangeurs thermiques,
- la source chaude (18) comportant un second échangeur thermique (34) fluide frigorigène/liquide caloporteur couplant thermiquement le circuit principal (14) de fluide frigorigène à un second circuit secondaire (36) de liquide caloporteur pouvant être raccordé sélectivement à au moins deux échangeurs thermiques,
**caractérisé en ce que** le premier circuit secondaire (26) peut être raccordé sélectivement à un échangeur thermique dit extérieur (30) et un échangeur thermique dit froid (32), et **en ce que** le second circuit secondaire (36) peut être raccordé sélectivement à l'échangeur extérieur (30) et un échangeur thermique dit chaud (39).

2. Dispositif selon la revendication 1, **caractérisé en ce que** les échangeurs froid (32) et chaud (39) sont agencés dans un habitacle du véhicule.

3. Dispositif selon la revendication 1 ou 2, **caractérisé en ce que** l'échangeur extérieur (30) est un échangeur liquide caloporteur/air.

4. Dispositif selon l'une quelconque des revendications précédentes, **caractérisé en ce que** l'échangeur froid (32) est un échangeur liquide caloporteur/air.

5. Dispositif selon l'une quelconque des revendications précédentes, **caractérisé en ce que** l'échangeur chaud (39) est un échangeur liquide caloporteur/air.

6. Dispositif selon l'une quelconque des revendications précédentes, **caractérisé en ce que** le premier circuit secondaire (26) de liquide caloporteur comprend une vanne trois voies (40) raccordée à la sortie du premier échangeur thermique (24) fluide frigorigène/liquide caloporteur de la source froide, à l'entrée de l'échangeur extérieur (30) et à l'entrée de l'échangeur froid (32).

7. Dispositif selon l'une quelconque des revendications précédentes, **caractérisé en ce que** le second circuit secondaire (36) de liquide caloporteur comprend une vanne trois voies (42) raccordée à la sortie du second échangeur (34) de fluide frigorigène/liquide caloporteur de la source chaude, à l'entrée de l'échangeur extérieur (30) et à l'entrée de l'échangeur chaud (39).

8. Dispositif selon l'une quelconque des revendications précédentes, **caractérisé en ce que** les premier (26) et second (36) circuits secondaires de liquide caloporteur comprennent une vanne trois voies (44) commune raccordée à l'entrée du premier échangeur thermique (24) fluide frigorigène/liquide caloporteur de la source froide, à l'entrée du second échangeur thermique (34) fluide frigorigène/liquide caloporteur de la source chaude et à la sortie de l'échangeur extérieur (30).

9. Dispositif selon l'une quelconque des revendications précédentes, **caractérisé en ce que** le premier circuit secondaire (26) peut être raccordé sélectivement à un échangeur thermique extérieur supplémentaire (30A).

10. Dispositif selon la revendication 9, **caractérisé en ce que** l'échangeur extérieur supplémentaire (30A) est un échangeur liquide caloporteur/vecteur de calories provenant directement ou indirectement d'un gaz, notamment un gaz d'échappement d'un moteur du véhicule, d'un liquide, notamment un liquide de refroidissement du moteur du véhicule, ou d'un solide, notamment au moins un composant électrique ou électronique du véhicule, ce vecteur de calories est choisi de façon que l'échangeur extérieur supplémentaire (30A) forme, vis-à-vis du liquide caloporteur circulant dans le premier circuit secondaire (26), une source froide plus chaude que l'échangeur extérieur (30).

11. Dispositif selon la revendication 9 ou 10, **caractérisé en ce que** le premier circuit secondaire (26) de liquide caloporteur comprend une vanne trois voies supplémentaire (46) raccordée à la sortie du premier échangeur thermique (24) fluide frigorigène/liquide caloporteur de la source froide, à l'entrée de l'échangeur extérieur (30) et à l'entrée de l'échangeur extérieur supplémentaire (30A).

12. Dispositif selon l'une quelconque des revendications précédentes, **caractérisé en ce que** l'échangeur chaud (39) est raccordé à une branche (48) d'un circuit de liquide de refroidissement d'un moteur thermique (50) du véhicule, l'extrémité aval de la branche (48) étant raccordée à une entrée de liquide caloporteur de l'échangeur chaud (39) et l'extrémité amont de la branche (48) étant raccordée à une sortie de liquide caloporteur de l'échangeur chaud (39).

13. Dispositif selon l'une quelconque des revendications précédentes, **caractérisé en ce qu'**il comprend un échangeur thermique subsidiaire (54) en échange thermique avec un organe du véhicule à réguler thermiquement, raccordé en parallèle aux échangeurs froid (32) et chaud (39).

14. Dispositif selon la revendication 13, **caractérisé en ce que** le premier circuit secondaire (26) de liquide caloporteur comprend une vanne trois voies subsidiaire (56) raccordée à la sortie du premier échangeur thermique (24) fluide frigorigène/liquide caloporteur de la source froide, à l'entrée de l'échangeur subsidiaire (54) et à l'entrée de l'échangeur froid (32).

15. Dispositif selon la revendication 13 ou 14, **caractérisé en ce que** le second circuit secondaire (36) de liquide caloporteur comprend une vanne trois voies subsidiaire (58) raccordée à la sortie du second échangeur (34) de fluide frigorigène/liquide caloporteur de la source chaude, à l'entrée de l'échangeur subsidiaire (54) et à l'entrée de l'échangeur chaud (39).

16. Dispositif selon l'une quelconque des revendications 13 à 15, **caractérisé en ce que** les premier (26) et second (36) circuits secondaires de liquide caloporteur comprennent une vanne trois voies subsidiaire (60) commune raccordée à l'entrée du premier échangeur thermique (24) fluide frigorigène/liquide caloporteur de la source froide, à l'entrée du second échangeur thermique (34) fluide frigorigène/liquide caloporteur de la source chaude et à la sortie de l'échangeur subsidiaire (54).

17. Dispositif selon l'une quelconque des revendications précédentes, **caractérisé en ce que** le circuit principal (14) de fluide frigorigène comportant les deux échangeurs thermiques (24, 34) dans lesquels circule le fluide frigorigène est constitué de plusieurs tronçons regroupés en un seul module, dans lequel circule le fluide frigorigène, destiné à être relié aux circuits secondaires (26, 36) de liquide caloporteur par l'intermédiaire des échangeurs thermiques (24, 34) fluide frigorigène/liquide caloporteur, les tronçons étant raccordés entre eux de préférence par soudage.

18. Dispositif selon l'une quelconque des revendications précédentes, **caractérisé en ce que** le liquide caloporteur d'au moins un des premier et second circuits secondaires (26, 36) est un mélange d'eau et d'antigel.

## Patentansprüche

1. Kraftfahrzeug-Temperaturregelungssystem mit:
- einer Wärmepumpe (12) mit einem Kältemittel-Kompressionshauptkreislauf (14), welcher Kalorien aus einer Kältequelle (16) entnimmt, um sie zu einer Wärmequelle (18) zu übermitteln,
- wobei die Kältequelle (16) einen ersten Kältemittel-/Wärmetauschflüssigkeit-Wärmetauscher (24) aufweist, welcher den Kältemittel-Hauptkreislauf (14) mit einem ersten, selektiv an mindestens zwei Wärmetauscher anschließbaren Wärmetauschflüssigkeitsnebenkreislauf (26) thermisch koppelt,
- die Wärmequelle (18) einen zweiten Kältemittel-/Wärmetauschflüssigkeit-Wärmetauscher (34) aufweist, welcher den Kältemittel-Hauptkreislauf (14) mit einem zweiten, selektiv an mindestens zwei Wärmetauscher anschließbaren Wärmetauschflüssigkeitsnebenkreislauf (36) thermisch koppelt,
**dadurch gekennzeichnet, dass** der erste Nebenkreislauf (26) selektiv an einen so genannten externen Wärmetauscher (30) und an einen so genannten kalten Wärmetauscher (32) angeschlossen werden kann und dass der zweite Nebenkreislauf (36) selektiv an den externen Tauscher (30) und an einen so genannten warmen Wärmetauscher (39) angeschlossen werden kann.

2. System nach Anspruch 1, **dadurch gekennzeichnet, dass** der kalte Tauscher (32) und der warme Tauscher (39) in einem Innenraum des Fahrzeugs angeordnet sind.

3. System nach Anspruch 1 oder 2, **dadurch gekennzeichnet, dass** der externe Tauscher (30) ein Wärmetauschflüssigkeit-/Luft-Tauscher ist.

4. System nach einem der vorhergehenden Ansprüche, **dadurch gekennzeichnet, dass** der kalte Tauscher (32) ein Wärmetauschflüssigkeit-/Luft-Tauscher ist.

5. System nach einem der vorhergehenden Ansprüche, **dadurch gekennzeichnet, dass** der warme Tauscher (39) ein Wärmetauschflüssigkeit-/Luft-Tauscher ist.

6. System nach einem der vorhergehenden Ansprüche, **dadurch gekennzeichnet, dass** der erste Wärmetauschflüssigkeitsnebenkreislauf (26) ein Drei-Wege-Ventil (40) umfasst, welches an den Ausgang des ersten Kältemittel-/Wärmetauschflüssigkeit-Wärmetauschers (24) der Kältequelle, an den Eingang des externen Tauschers (30) und an den Eingang des kalten Tauschers (32) angeschlossen ist.

7. System nach einem der vorhergehenden Ansprüche, **dadurch gekennzeichnet, dass** der zweite Wärmetauschflüssigkeitsnebenkreislauf (36) ein Drei-Wege-Ventil (42) umfasst, welches an den Ausgang des zweiten Kältemittel-/Wärmetauschflüssigkeit-Tauschers (34) der Wärmequelle, an den Eingang des externen Tauschers (30) und an den Eingang des warmen Tauschers (39) angeschlossen ist.

8. System nach einem der vorhergehenden Ansprüche, **dadurch gekennzeichnet, dass** der erste Wärmetauschflüssigkeitsnebenkreislauf (26) und der zweite Wärmetauschflüssigkeitsnebenkreislauf (36) ein gemeinsames Drei-Wege-Ventil (44) umfassen, welches an den Eingang des ersten Kältemittel-/Wärmetauschflüssigkeit-Wärmetauschers (24) der Kältequelle, an den Eingang des zweiten Kältemittel-/Wärmetauschflüssigkeit-Wärmetauschers (34) der Wärmequelle und an den Ausgang des externen Tauschers (30) angeschlossen ist.

9. System nach einem der vorhergehenden Ansprüche, **dadurch gekennzeichnet, dass** der erste Nebenkreislauf (26) selektiv an einen zusätzlichen externen Wärmetauscher (30A) angeschlossen werden kann.

10. System nach Anspruch 9, **dadurch gekennzeichnet, dass** der zusätzliche exteme Tauscher (30A) ein Tauscher zwischen Wärmetauschflüssigkeit und Träger von Kalorien ist, welche unmittelbar oder mittelbar aus einem Gas, insbesondere einem Abgas eines Motors des Fahrzeugs, aus einer Flüssigkeit, insbesondere einer Kühlflüssigkeit des Motors des Fahrzeugs, oder aus einem Festkörper, insbesondere mindestens einem elektrischen oder elektronischen Bauteil des Fahrzeugs stammen, wobei dieser Kalorienträger derart ausgewählt ist, dass der zusätzliche externe Tauscher (30A) gegenüber der in dem ersten Nebenkreislauf (26) fließenden Wärmetauschflüssigkeit eine Kältequelle bildet, welche wärmer ist, als der exteme Tauscher (30).

11. System nach Anspruch 9 oder 10, **dadurch gekennzeichnet, dass** der erste Wärmetauschflüssigkeitsnebenkreislauf (26) ein zusätzliches Drei-Wege-Ventil (46) umfasst, welches an den Ausgang des ersten Kältemittel-/Wärmetauschflüssigkeit-Wärmetauschers (24) der Kältequelle, an den Eingang des externen Tauschers (30) und an den Eingang des zusätzlichen externen Tauschers (30A) angeschlossen ist.

12. System nach einem der vorhergehenden Ansprüche, **dadurch gekennzeichnet, dass** der warme Tauscher (39) an einen Zweig (48) eines Kreislaufs mit einer Kühlflüssigkeit eines Verbrennungsmotors (50) des Fahrzeugs angeschlossen ist, wobei das strömungsabwärts gelegene Ende des Zweigs (48) an einen Eintritt der Wärmetauschflüssigkeit des warmen Tauschers (39) und das strömungsaufwärts gelegene Ende des Zweigs (48) an einen Austritt der Wärmetauschflüssigkeit des warmen Tauschers (39) angeschlossen sind.

13. System nach einem der vorhergehenden Ansprüche, **dadurch gekennzeichnet, dass** es einen Hilfswärmetauscher (54) umfasst, welcher mit einem Organ des thermisch zu regelnden Fahrzeugs Wärme austauscht und parallel zu dem kalten Tauscher (32) und zu dem warmen Tauscher (39) angeschlossen ist.

14. System nach Anspruch 13, **dadurch gekennzeichnet, dass** der erste Wärmetauschflüssigkeitsnebenkreislauf (26) ein Drei-Wege-Hilfsventil (56) umfasst, welches an den Ausgang des ersten Kältemittel-/Wärmetauschflüssigkeit-Wärmetauschers (24) der Kältequelle, an den Eingang des Hilfstauschers (54) und an den Eingang des kalten Tauschers (32) angeschlossen ist.

15. System nach Anspruch 13 oder 14, **dadurch gekennzeichnet, dass** der zweite Wärmetauschflüssigkeitsnebenkreislauf (36) ein Drei-Wege-Hilfsventil (58) umfasst, welches an den Ausgang des zweiten Kältemittel-/Wärmetauschflüssigkeit-Tauschers (34) der Wärmequelle, an den Eingang des Hilfstauschers (54) und an den Eingang des warmen Tauschers (39) angeschlossen ist.

16. System nach einem der Ansprüche 13 bis 15, **dadurch gekennzeichnet, dass** der erste Wärmetauschflüssigkeitsnebenkreislauf (26) und der zweite Wärmetauschflüssigkeitsnebenkreislauf (36) ein gemeinsames Drei-Wege-Hilfsventil (60) umfassen, welches an den Eingang des ersten Kältemittel-/Wärmetauschflüssigkeit-Wärmetauschers (24) der Kältequelle, an den Eingang des zweiten Kältemittel-/Wärmetauschflüssigkeit-Wärmetauschers (34) der Wärmequelle und an den Ausgang des Hilfstauschers (54) angeschlossen ist.

17. System nach einem der vorhergehenden Ansprüche, **dadurch gekennzeichnet, dass** der Kältemittel-Hauptkreislauf (14) mit den beiden Wärmetauschern (24, 34), in denen das Kältemittel fließt, aus mehreren Abschnitten besteht, welche in ein einziges Modul zusammengefasst sind, in dem das Kältemittel fließt und welches dazu bestimmt ist, mit den Wärmetauschflüssigkeitsnebenkreisläufen (26, 36) über die Kältemittel-/Wärmetauschflüssigkeit-Wärmetauscher (24, 34) verbunden zu werden, wobei die Abschnitte bevorzugt durch Schweißen miteinander verbunden sind.

18. System nach einem der vorhergehenden Ansprüche, **dadurch gekennzeichnet, dass** die Wärmetauschflüssigkeit mindestens eines von dem ersten Nebenkreislauf und von dem zweiten Nebenkreislauf (26, 36) ein Gemisch aus Wasser und Frostschutzmittel ist.

## Claims

1. Motor vehicle temperature regulation apparatus of the type comprising:
· a heat pump (12) comprising a main compression circuit (14) for a refrigerant fluid taking heat from a cold source (16) to transfer it to a hot source (18);
· the cold source (16) comprising a first heat exchanger (24) for exchanging heat between the refrigerant fluid and a coolant liquid, thermally coupling the main refrigerant circuit (14) to a first secondary coolant circuit (26) capable of being selectively connected to at least two heat exchangers; and
· the hot source (18) comprising a second heat exchanger (34) for exchanging heat between the refrigerant fluid and a coolant liquid, thermally coupling the main refrigerant circuit (14) to a second secondary coolant circuit (36) capable of being selectively connected to at least two heat exchangers;
**characterized in that** the first secondary circuit (26) is capable of being selectively connected to an "outside" heat exchanger (30) and to a "cold" heat exchanger (32), and **in that** the second secondary circuit (36) is capable of being selectively connected to the outside heat exchanger (30) and to a "hot" heat exchanger (39).

2. Apparatus according to claim 1, **characterized in that** the cold (32) and hot (39) heat exchangers are arranged in a cabin of the vehicle.

3. Apparatus according to claim 1 or 2, **characterized in that** the outside heat exchanger (30) is a coolant/air heat exchanger.

4. Apparatus according to any preceding claim, **characterized in that** the cold heat exchanger (32) is a coolant/air heat exchanger.

5. Apparatus according to any preceding claim, **characterized in that** the hot heat exchanger (39) is a coolant/air heat exchanger.

6. Apparatus according to any preceding claim, **characterized in that** the first secondary coolant circuit (26) includes a three-port valve (40) connected to the outlet of the first refrigerant/coolant heat exchanger (24) of the cold source, to the inlet of the outside heat exchanger (30), and to the inlet of the cold heat exchanger (32).

7. Apparatus according to any preceding claim, **characterized in that** the second secondary coolant circuit (36) includes a three-port valve (42) connected to the outlet of the second refrigerant/coolant heat exchanger (34) of the hot source, to the inlet of the outside heat exchanger (30), and to the inlet of the hot heat exchanger (39).

8. Apparatus according to any preceding claim, **characterized in that** the first and second secondary coolant circuits (26, 36) include a common three-port valve (44) connected to the inlet of the first refrigerant/coolant heat exchanger (24) of the cold source, to the inlet of the second refrigerant/coolant heat exchanger (34) of the hot source, and to the outlet of the outside heat exchanger (30).

9. Apparatus according to any preceding claim, **characterized in that** the first secondary circuit (26) is capable of being selectively connected to a supplementary outside heat exchanger (30A).

10. Apparatus according to claim 9, **characterized in that** the supplementary outside heat exchanger (30A) exchanges heat between the coolant liquid and a vector of heat coming directly or indirectly from a gas, in particular an exhaust gas of the vehicle engine, a liquid, in particular a cooling liquid of the vehicle engine, or a solid, in particular at least one electrical or electronic component of the vehicle, said heat vector being selected so that the supplementary outside heat exchanger (30A) acts relative to the coolant circulating in the first secondary circuit (26) as a cold source that is hotter than the outside heat exchanger (30).

11. Apparatus according to claim 9 or 10, **characterized in that** the first secondary coolant circuit (26) includes a supplementary three-port valve (46) connected to the outlet of the first refrigerant/coolant heat exchanger (24) of the cold source, to the inlet of the outside heat exchanger (30), and to the inlet of the supplementary outside heat exchanger (30A).

12. Apparatus according to any preceding claim, **characterized in that** the hot heat exchanger (39) is connected to a branch (48) of a cooling liquid circuit of an engine (50) of the vehicle, the downstream end of the branch (48) being connected to a coolant inlet of the hot heat exchanger (39), and the upstream end of the branch (48) being connected to a coolant outlet of the hot heat exchanger (39).

13. Apparatus according to any preceding claim, **characterized in that** it includes a subsidiary heat exchanger (54) in heat exchange with a part of the vehicle that is to be temperature-regulated, the subsidiary heat exchanger being connected in parallel with the cold (32) and hot (39) heat exchangers.

14. Apparatus according to claim 13, **characterized in that** the first secondary coolant circuit (26) includes a subsidiary three-port valve (56) connected to the outlet of the first refrigerant/coolant heat exchanger (24) of the cold source, to the inlet of the subsidiary heat exchanger (54), and to the inlet of the cold heat exchanger (32).

15. Apparatus according to claim 13 or claim 14, **characterized in that** the second secondary coolant circuit (36) includes a subsidiary three-port valve (58) connected to the outlet of the second refrigerant/coolant heat exchanger (34) of the hot source, to the inlet of the subsidiary heat exchanger (54), and to the inlet of the hot heat exchanger (39).

16. Apparatus according to any claims 13 to 15, **characterized in that** the first (26) and second (36) secondary coolant circuits include a common subsidiary three-port valve (60) connected to the inlet of the first refrigerant/coolant heat exchanger (24) of the cold source, to the inlet of the second refrigerant/coolant heat exchanger (34) of the hot source, and to the outlet of the subsidiary heat exchanger (54).

17. Apparatus according to any preceding claim, **characterized in that** the main refrigerant circuit (14) having the two heat exchangers (24, 34) in which the refrigerant circulates is constituted by a plurality of segments grouped together in a single module in which the refrigerant fluid circulates, said module being designed to be connected to the secondary coolant circuits (26, 36) via the refrigerant/coolant heat exchangers (24, 34), said segments being connected to one another preferably by welding.

18. Apparatus according to any preceding claim, **characterized in that** the coolant liquid in at least one of the first and second secondary circuits (26, 36) is a mixture of water and antifreeze.
